# EUROPEAN PATENT SPECIFICATION

(11) **EP 2 970 017 B1**
(45) Date of publication and mention of the grant of the patent: **10.07.2019**
(21) Application number: 14718828.8
(22) Date of filing: 12.03.2014
(51) Int. Cl.: C04B 35/565, C04B 35/573, C04B 35/628, C04B 35/80, C04B 35/14, C04B 35/16

(54) **SIC BASED CERAMIC MATRIX COMPOSITES WITH LAYERED MATRICES AND METHODS FOR PRODUCING SIC BASED CERAMIC MATRIX COMPOSITES WITH LAYERED MATRICES**
SIC-BASIERTE KERAMIKMATRIX-VERBUNDSTOFFE MIT GESCHICHTETEN MATRIZEN UND VERFAHREN ZUR HERSTELLUNG SIC-BASIERTER KERAMIKMATRIX-VERBUNDSTOFFE MIT GESCHICHTETEN MATRIZEN
COMPOSITES À MATRICES CÉRAMIQUES À BASE DE SIC DOTÉS DE MATRICES EN COUCHES ET PROCÉDÉS DE FABRICATION DE COMPOSITES À MATRICES CÉRAMIQUES À BASE DE SIC DOTÉS DE MATRICES EN COUCHES

(30) Priority: 15.03.2013 US 201361788796 P
(43) Date of publication of application: 20.01.2016
(73) Proprietor: Rolls-Royce Corporation, Indianapolis, Indiana 46225-1103 (US)
(72) Inventor: CHAMBERLAIN, Adam L., Mooresville, Indiana 46158 (US); LAZUR, Andrew J., Huntington Beach, California 92646 (US)
(74) Representative: Pfenning, Meinig & Partner mbB
(86) International application number: PCT/US2014/024201
(87) International publication number: WO 2014/150777

(56) References cited:
- US-A1- 2007 054 103
- US-A1- 2011 170 653
- US-B1- 7 687 016
- LIU ET AL: "Microstructure and properties of particle reinforced silicon carbide and silicon nitride ceramic matrix composites prepared by chemical vapor infiltration", MATERIALS SCIENCE AND ENGINEERING A: STRUCTURAL MATERIALS:PROPERTIES, MICROSTRUCTURE & PROCESSING, LAUSANNE, CH, vol. 475, no. 1-2, 28 January 2008 (2008-01-28), pages 217-223, XP022435950, ISSN: 0921-5093, DOI: 10.1016/J.MSEA.2007.04.031

## Description

### FIELD OF THE DISCLOSURE

The present disclosure relates generally to ceramic matrix composites, and more specifically to silicon carbide based ceramic matrix composites with layered matrices.

### BACKGROUND

Ceramic Matrix Composites (CMS's) are materials that include ceramic fibers embedded in a ceramic matrix. CMC's typically exhibit desirable mechanical, chemical and physical properties at high temperatures. For example, CMS's are typically more resistant to oxidation at high temperatures than are metals. CMC's are generally tougher than monolithic ceramics and exhibit damage tolerance. SiC/SiC CMC's are one example of a composite material that exhibits excellent high temperature mechanical, physical and chemical properties. Such materials are suitable for a number of high temperature applications, such as use in producing hot sector components of gas turbine engines. SiC/SiC CMC engine components allow gas turbine engines to operate at much higher temperatures than engines having superalloy metal components.

Although SiC/SiC CMC's are typically more resistant to oxidation than metals, they do suffer from active oxidation when exposed to the environment of a turbine engine. The active oxidation is a result of the instability of silicon dioxide (SiO₂) when exposed to the high gas velocity and pressures of the engine environment. Active oxidation can cause recession of components during operation, which can eventually lead to failure.

US2007054103 discloses a carbon fiber preform containing a pyrolytic carbon interface layer, a SiC first matrix layer, a second matrix layer containing Si-doped BN and a third SiC matrix layer, all layers applied by CVI. On contact with oxygen the BN coating is oxidised to form a boron oxide and/or boron silicate glass layer. This layer prevents further oxidation of the underlying material.

### SUMMARY

A method for producing a ceramic matrix composite includes the steps of forming a network of fibers, depositing a first matrix layer on the fibers and depositing a second matrix layer containing an element that when oxidized forms a silicate that is stable at high temperatures.

The first matrix layer is SiC.

In some embodiments, the second matrix layer is SiNC doped with an element that when oxidized forms a silicate that is stable at high temperatures. In other embodiments, the second matrix layer is Si₃N₄ doped with an element that when oxidized forms a silicate that is stable at high temperatures. The element is yttrium, ytterbium, dysprosium, erbium, gadolinium, scandium, lanthanum, cerium, praseodymium, neodymium, promethium, samarium, europium, terbium, holmium, thulium, or lutetium.

In some embodiments, the method further includes the step of depositing an interface layer on the fiber network before depositing the matrix layers. In some embodiments, the interface layer includes boron nitride. In other embodiments, the interface layer includes pyrolitic carbon.

In some embodiments of the invention the matrix layers are deposited by chemical vapor infiltration.

In some embodiments, the method includes further processing the ceramic matrix composite by polymer infiltration and pyrolysis, slurry infiltration, melt infiltration and/ or heat treating.

A ceramic matrix composite includes a network of fibers, a first matrix layer and a second matrix layer containing an element that when oxidized forms a silicate that is stable at high temperatures.

The first matrix layer is SiC.

In some embodiments, the second matrix layer is SiNC doped with an element that when oxidized forms a silicate that is stable at high temperatures. In other embodiments, the second matrix layer is Si₃N₄ doped with an element that when oxidized forms a silicate that is stable at high temperatures. The element is yttrium, ytterbium, dysprosium, erbium, gadolinium, scandium, lanthanum, cerium, praseodymium, neodymium, promethium, samarium, europium, terbium, holmium, thulium, or lutetium.

In some embodiments, the ceramic matrix composite may include an interface layer between the fibers and the first matrix layer. In some embodiments, the interface layer includes boron nitride. In other embodiments, the interface layer includes pyrolitic carbon.

These and other features of the present disclosure will become more apparent from the following description of the illustrative embodiments.

### BRIEF DESCRIPTION OF THE DRAWINGS

Fig. 1 is a flow chart illustrating a process for producing silicon carbide based ceramic matrix composites with layered matrices;
Fig. 2 illustrates the microstructure of a ceramic matrix composite with layered matrices; and
Fig. 3 illustrates the microstructure of ceramic matrix composite fibers with individual layered matrices, which is not according to the present invention.

### DETAILED DESCRIPTION OF THE DRAWINGS

For the purposes of promoting an understanding of the principles of the disclosure, reference will now be made to a number of illustrative embodiments illustrated in the drawings and specific language will be used to describe the same.

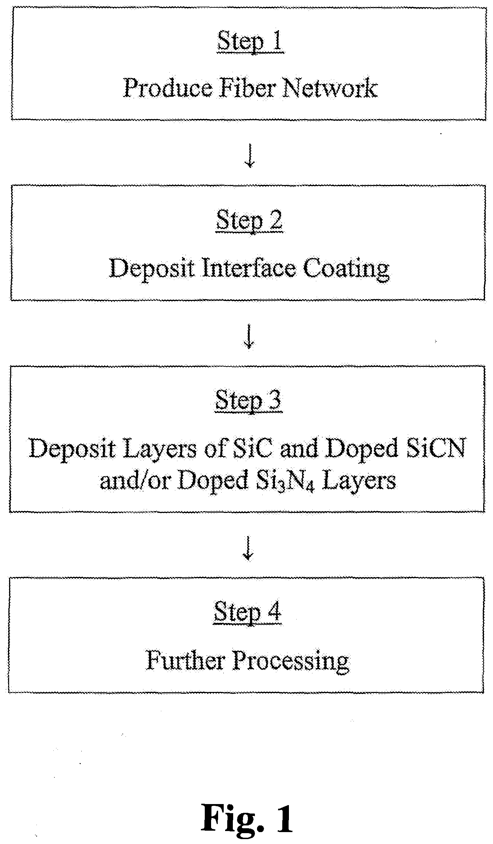

A process for producing layered ceramic matrix composites is shown in Fig. 1. In Step 1 of the process, a fiber network is produced. For example, the fiber network can be a near net shape preform of a component. Fiber volume may range between about 15% and about 50%. More specifically, the fiber volume will typically range between about 30% and about 40%. In certain embodiments of the invention, the fibers are stoichiometric or non-stoichiometric SiC fibers, SiCN fibers or silicon oxycarbide fibers.

The fiber preform may be coated with one or more interface coatings (Step 2). For example, the preform may be coated with boron nitride (BN) or pyrolitic carbon. The interface coatings can be selected to perform a number of functions, such as resisting crack propagation, increasing toughness of the matrix, improving bonding between the matrix and the fibers or producing other desirable results. The fibers may be coated by CVI or other methods.

The preform is then coated with alternating layers of silicon carbide and silicon carbonitride (SiNC) doped with one or more elements that when oxidized form a silicate that is stable at high temperatures. Alternatively, the preform can be coated with alternating layers of silicon carbide and silicon nitride (Si₃N₄) doped with one or more elements that when oxidized form a silicate that is stable at high temperatures. As another alternative, the preform can be coated with alternating layers of SiC, SiNC doped with one or more elements that when oxidized form a silicate that is stable at high temperatures and Si₃N₄ doped with one or more elements that when oxidized form a silicate that is stable at high temperatures. (Step 3) Examples of elements that when oxidized form a silicate that is stable at high temperatures include yttrium (Y), ytterbium (Yb), dysprosium (Dy), erbium (Er), gadolinium (Gd), scandium (Sc), lanthanum (La), cerium (Ce), praseodymium (Pr), neodymium (Nd), promethium (Pm), samarium (Sm), europium (Eu), terbium (Tb), holmium (Ho), thulium (Tm), lutetium (Lu). The layers may be deposited by chemical vapor infiltration (CVI). The Si₃N₄ and SiNC layers in certain embodiments contain up to about 25 atomic percent of the doping element.

The CMC may undergo further processing after deposition of the matrix material. (Step 4) For example, the CMC may be further processed by polymer infiltration and pyrolysis (PIP), slurry infiltration, melt infiltration, further CVI, heat treating to obtain a desired material microstructure or combinations of the foregoing.

When the SiC layers are exposed to oxidizing conditions, they will form silica, which is an effective barrier to oxygen diffusion. The doped Si₃N₄ and/or SiNC layers will form silicates, which are effective barriers to steam diffusion.

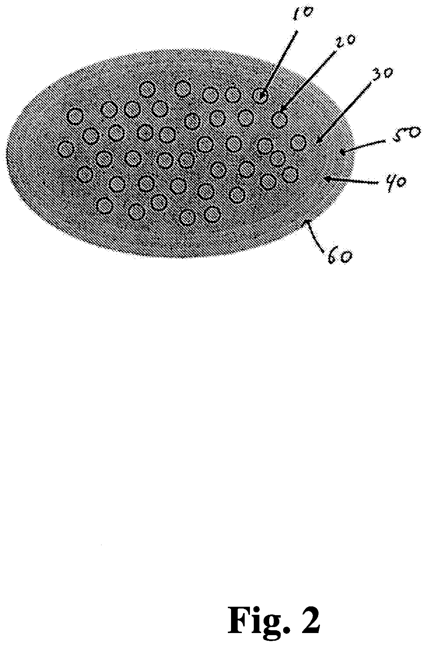

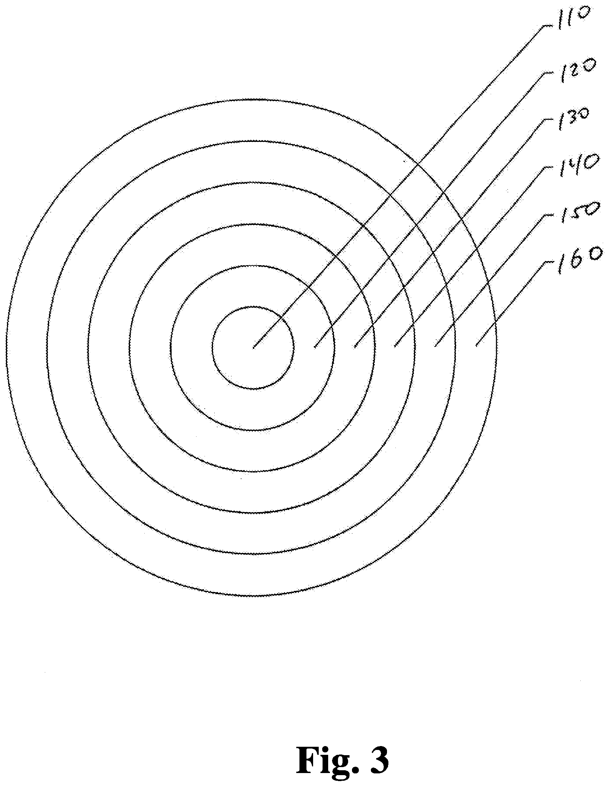

The following are theoretical examples of CMC's and methods for producing CMC's according to certain embodiments of the invention.
**Example 1:** A preform for a component, such as a component of a gas turbine engine, is produced from a silicon carbide fiber. The preform is approximately 35% fiber volume. The preform is then coated with a with boron nitride or pyrolitic carbon interface layer. After application of the interface layer, a layered matrix is produced by depositing alternating layers of SiC, SiCN doped with an element that when oxidized forms a silicate that is stable at high temperatures and/or Si₃N₄ doped with an element that when oxidized forms a silicate that is stable at high temperatures on the preform via chemical vapor infiltration (CVI). The doping element may be introduced into the SiNC and Si₃N₄ layers by addition of an appropriate gas stream during CVI. For example, yttrium could be added by introducing yttrium chloride gas. This process results in layers containing a silicide of the doping element in combination with SiC, SiNC, or Si₃N₄. Alternatively, a carbide, boride or nitride of the doping element could be deposited to achieve similar properties.
   The final microstructure of the CMC is represented by Figure 2. The microstructure includes fibers 10, interface coating 20, first SiC layer 30, first doped SiNC or doped Si₃N₄ layer 40, second SiC layer 50 and second doped SiNC or doped Si₃N₄ layer 60. Note that additional layers can be applied. In this example, first SiC layer 30 is approximately 2% to approximately 40% of the total composite volume. More typically, firs SiC layer 30 is 10% to approximately 20% of the total composite volume. The remaining layered structure is approximately 10% to 45% of the composite volume, the amount being dependant on the desired final properties. The thickness of each layer ranges between about 0.1 microns and about 10 microns.
   After CVI deposition is complete, the composite may be heat treated to reduce chemical gradients. Heat treatment temperatures are typically in the range of about 2200 ° F to about 3000 ° F.
**Example 2:** As an alternative, not according to the invention, individual doped SiCN layers and/or doped Si₃N₄ layers can be deposited around individual fibers. This can be done immediately after depositing one or more interface layers or after depositing individual SiC layers approximately 0.1um to approximately 5um around the fibers. A resulting fiber with individual layered matrices is illustrated in Figure 3. As shown in Figure 3, fiber 110, is surrounded by interface coating 120, first SiC layer 130, first doped SiNC or doped Si₃N₄ layer 140, second SiC layer 150 and second doped SiNC or doped Si₃N₄ layer 160. The individual fibers coated in this manner can be further embedded in a matrix of alternating layers of SiC, doped SiNC and/or doped Si₃N₄ like the fibers in the embodiment of Figure 2.
**Example 3:** As another alternative, not according to the invention, improved oxidation resistance can be achieved by depositing only doped Si₃N₄ or doped SiNC onto the fibers and eliminating the SiC layers.

## Claims

1. A method for producing a ceramic matrix composite, including the steps of:
forming a network of fibers;
depositing a first matrix layer which is SiC on the fibers; and
depositing a second matrix layer containing an element that when oxidized forms a silicate that is stable at high temperatures, the second matrix layer is SiNC doped with the element or Si₃N₄ doped with the element,
wherein the element that when oxidized forms a silicate that is stable at high temperatures is selected from the group consisting of yttrium, ytterbium, dysprosium, erbium, gadolinium, scandium, lanthanum, cerium, praseodymium, neodymium, promethium, samarium, europium, terbium, holmium, thulium, and lutetium.

2. The method of claim 1, further including the step of depositing an interface layer on the fiber network before depositing the matrix layers, wherein the interface layer includes boron nitride or pyrolitic carbon.

3. The method of any of the preceding claims, wherein the matrix layers are deposited by chemical vapor infiltration.

4. The method of any of the preceding claims, further including processing the ceramic matrix composite by polymer infiltration and pyrolysis and/or processing the ceramic matrix composite by slurry infiltration and/or processing the ceramic matrix composite by melt infiltration.

5. The method of any of the preceding claims, further including heat treating the ceramic matrix composite.

6. A ceramic matrix composite, including:
a network of fibers;
a first matrix layer which is SiC; and
a second matrix layer containing an element that when oxidized forms a silicate that is stable at high temperatures, the second matrix layer is SiNC doped with the element or Si₃N₄ doped with the element,
wherein the element that when oxidized forms a silicate that is stable at high temperatures is selected from the group consisting of yttrium, ytterbium, dysprosium, erbium, gadolinium, scandium, lanthanum, cerium, praseodymium, neodymium, promethium, samarium, europium, terbium, holmium, thulium, and lutetium.

7. The ceramic matrix composite of claim 6, further including an interface layer between the fibers and the first matrix layer, wherein the interface layer includes boron nitride or pyrolitic carbon.

## Patentansprüche

1. Verfahren zur Herstellung eines keramischen Faserverbundwerkstoffes, umfassend die Schritte:
Bilden eines Fasernetzwerks;
Abscheiden einer ersten Matrixschicht, die SiC ist, auf den Fasern; und
Abscheiden einer zweiten Matrixschicht, die ein Element enthält, das bei Oxidation bei hohen Temperaturen stabiles Silikat bildet, wobei die zweite Matrixschicht mit dem Element SiNC-dotiert ist oder mit dem Element Si₃N₄-dotiert ist,
wobei das Element, das bei Oxidation ein bei hohen Temperaturen stabiles Silikat bildet, ausgewählt ist aus der Gruppe bestehend aus Yttrium, Ytterbium, Dysprosium, Erbium, Gadolinium, Scandium, Lanthan, Cer, Praseodym, Neodym, Promethium, Samarium, Europium, Terbium, Holmium, Thulium und Lutetium.

2. Verfahren nach Anspruch 1, ferner umfassend den Schritt des Abscheidens einer Grenzflächenschicht auf dem Fasernetzwerk vor dem Abscheiden der Matrixschichten, wobei die Grenzflächenschicht Bornitrid oder pyrolytischen Kohlenstoff enthält.

3. Verfahren nach einem der vorangehenden Ansprüche, wobei die Matrixschichten durch chemische Gasphasenabscheidung abgeschieden werden.

4. Verfahren nach einem der vorangehenden Ansprüche, ferner umfassend ein Bearbeiten des keramischen Faserverbundwerkstoffes durch Polymerinfiltration und Pyrolyse und/oder Bearbeiten des keramischen Faserverbundwerkstoffes durch Infiltration mit Schlicker und/oder Bearbeiten des keramischen Faserverbundwerkstoffes durch Schmelzinfiltration.

5. Verfahren nach einem der vorangehenden Ansprüche, ferner umfassend ein Wärmebehandeln des keramischen Faserverbundwerkstoffes.

6. Keramischer Faserverbundwerkstoff, aufweisend:
ein Fasernetzwerk;
eine erste Matrixschicht, die SiC ist; und
eine zweite Matrixschicht, die ein Element enthält, das bei Oxidation ein bei hohen Temperaturen stabiles Silikat bildet, die zweite Matrixschicht mit dem Element SiNC-dotiert ist mit dem Element oder Si₃N₄-dotiert ist,
wobei das Element, das bei Oxidation ein bei hohen Temperaturen stabiles Silikat bildet, ausgewählt ist aus der Gruppe bestehend aus Yttrium, Ytterbium, Dysprosium, Erbium, Gadolinium, Scandium, Lanthan, Cer, Praseodym, Neodym, Promethium, Samarium, Europium, Terbium, Holmium, Thulium und Lutetium.

7. Keramischer Faserverbundwerkstoff nach Anspruch 6, ferner aufweisend eine Grenzflächenschicht zwischen den Fasern und der ersten Matrixschicht, wobei die Grenzflächenschicht Bornitrid oder pyrolytischen Kohlenstoff enthält.

## Revendications

1. Procédé de production d'un composite à matrice céramique, comprenant les étapes de :
formation d'un réseau de fibres ;
dépôt d'une première couche de matrice qui est SiC sur les fibres ; et
dépôt d'une deuxième couche de matrice contenant un élément qui, lorsqu'il est oxydé, forme un silicate qui est stable à des températures élevées, la deuxième couche de matrice étant SiNC dopé avec ledit élément ou Si₃N₄ dopé avec ledit élément,
dans lequel l'élément qui, lorsqu'il est oxydé, forme un silicate qui est stable à des températures élevées est choisi dans le groupe constitué des yttrium, ytterbium, dysprosium, erbium, gadolinium, scandium, lanthane, cérium, praséodyme, néodyme, prométhium, samarium, europium, terbium, holmium, thulium et lutétium.

2. Procédé selon la revendication 1, comprenant en outre l'étape de dépôt d'une couche d'interface sur le réseau de fibres avant le dépôt des couches de matrice, dans lequel la couche d'interface comprend du nitrure de bore ou du carbone pyrolitique.

3. Procédé selon l'une quelconque des revendications précédentes, dans lequel les couches de matrice sont déposées par infiltration chimique en phase vapeur.

4. Procédé selon l'une quelconque des revendications précédentes, comprenant en outre le traitement du composite de matrice céramique par imprégnation et pyrolyse d'un polymère et/ou le traitement du composite à matrice céramique par imprégnation de suspensions de poudres et/ou traitement du composite de matrice céramique par imprégnation par un métal fondu.

5. Procédé selon l'une quelconque des revendications précédentes, comprenant en outre le traitement thermique du composite de matrice céramique.

6. Composite de matrice céramique, comprenant :
un réseau de fibres ;
une première couche de matrice qui est SiC ; et
une deuxième couche de matrice contenant un élément qui, lorsqu'il est oxydé, forme un silicate qui est stable à des températures élevées, la deuxième couche de matrice étant SiNC dopé avec ledit élément ou Si₃N₄ dopé avec ledit élément,
dans lequel l'élément qui, lorsqu'il est oxydé, forme un silicate qui est stable à des températures élevées est choisi dans le groupe constitué des yttrium, ytterbium, dysprosium, erbium, gadolinium, scandium, lanthane, cérium, praséodyme, néodyme, prométhium, samarium, europium, terbium, holmium, thulium et lutétium.

7. Composite de matrice céramique selon la revendication 6, comprenant en outre une couche d'interface entre les fibres et la première couche de matrice, dans lequel la couche d'interface comprend du nitrure de bore ou du carbone pyrolitique.
